(19) Europäisches Patentamt / European Patent Office / Office européen des brevets

(11) **EP 4 174 107 A1**

## (12) EUROPEAN PATENT APPLICATION
published in accordance with Art. 153(4) EPC

(43) Date of publication:
**03.05.2023 Bulletin 2023/18**

(21) Application number: **21831597.6**

(22) Date of filing: **19.04.2021**

(51) International Patent Classification (IPC):
*C08G 63/12* *(2006.01)*     *C08G 63/83* *(2006.01)*
*C08G 63/85* *(2006.01)*     *C08L 67/02* *(2006.01)*

(52) Cooperative Patent Classification (CPC):
**C08G 63/12; C08G 63/83; C08G 63/85;
C08L 67/02;** Y02W 30/62

(86) International application number:
**PCT/KR2021/004845**

(87) International publication number:
**WO 2022/004995 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020 KR 20200079641**

(71) Applicant: **SK Chemicals Co., Ltd.
Seongnam-si, Gyeonggi-do 13494 (KR)**

(72) Inventors:
• HWANG, Da-Young
  **Seongnam-si, Gyeonggi-do 13494 (KR)**
• LEE, Yoo Jin
  **Seongnam-si, Gyeonggi-do 13494 (KR)**

(74) Representative: **Berggren Oy
P.O. Box 16
Eteläinen Rautatiekatu 10A
00101 Helsinki (FI)**

## (54) POLYESTER COPOLYMER COMPRISING RECYCLED MONOMERS

(57) The present disclosure relates to polyester copolymer comprising recycled monomers, a method for preparation thereof, and an article comprising the same, and can provide polyester copolymer having excellent properties while using recycled monomers.

**Description**

**[Field of the Invention]**

This invention relates to polyester copolymer comprising recycled monomers, a method for preparation thereof, and an article comprising the same.

**[Description of the Related Art]**

Since polyester has excellent mechanical strength, heat resistance, transparency and gas barrier property, it is most suitable as the materials of a beverage bottle, packaging film, audio, video film, and the like, and is being used in large quantities. And, it is also being widely produced worldwide as industrial materials such as medical fiber or tire cord, and the like. Since a polyester sheet or plate has good transparency and excellent mechanical strength, it is widely used as the materials of a case, a box, a partition, store shelves, a protection panel, blister packaging, building material, interior finishing materials, and the like.

Meanwhile, waste plastic responsible for about 70% of marine pollution has recently come up as a serious social issue, and thus, each country is planning to recycle waste plastic simultaneously with regulating single-use plastic. Methods for recycling waste plastic can be largely classified into two methods, one is a method of collecting, pulverizing and cleaning waste plastic, and then, melt extruding to repelletize, and using it as raw material, and the other is a method of using material obtained by depolymerization of waste plastic as monomers for the synthesis of plastic. In the latter case, bis-2-hydroxyethylterephthalate can be obtained by depolymerization of PET or PETG among waste plastic, and studies for using it as monomers of polyester copolymer are being progressed.

However, it is difficult to obtain satisfactory material due to foreign substance in waste plastic, and particularly, plastic prepared from the material obtained by depolymerization of waste plastic often generates quality deterioration.

Thus, the inventors of the present disclosure confirmed that by using recycled bis-hydroxyethylterephthalate as monomers of polyester copolymer, and controlling the amount of the monomers as described below, the quality of polyester copolymer prepared from the material obtained by depolymerization of waste plastic can be improved, and completed the invention.

**[Disclosure]**

**[Technical Problem]**

It is an object of the invention to provide polyester copolymer comprising recycled monomers, a method for preparation thereof, and an article comprising the same.

**[Technical Solution]**

In order to achieve the object, there is provided polyester copolymer copolymerized from recycled bis-2-hydroxyethylterephthalate, dicarboxylic acid or a derivative thereof, and diol comprising ethylene glycol and comonomers, having a structure in which a part derived from the bis-2- hydroxyethylterephthalate, an acid part derived from the dicarboxylic acid or derivative thereof, and a diol part derived from the diol are repeated,

wherein the polyester copolymer comprises 10 to 80 wt% of the part derived from recycled bis-2-hydroxyethylterephthalate, and
the mole ratio of the diol and the dicarboxylic acid or derivative thereof is 0.2:1 to 1.35:1.

**Definition of terms**

The copolymer according to the present disclosure is prepared by copolymerization of dicarboxylic acid or a derivative thereof, and diol comprising ethyleneglycol and comonomers, and in the copolymerization process, recycled bis-2-hydroxyethylterephthalate participates in the reaction.

As used therein, the term 'a part derived from' means a certain part or unit derived from a specific compound included in the product of a chemical reaction, when the specific compound participates in the chemical reaction. Specifically, the acid part derived from dicarboxylic acid or a derivative thereof, and the diol part derived from diol respectively mean a repeat unit in the polyester copolymer formed by an esterification reaction or a polycondensation reaction. And, the part derived from bis-2- hydroxyethylterephthalate means a repeat unit in the polyester copolymer formed by an esterification reaction in the copolymerization reaction.

**Dicarboxylic acid or a derivative thereof**

The dicarboxylic acid or a derivative thereof used in the present disclosure is a main monomer constituting polyester copolymer together with the diol component. Particularly, the dicarboxylic acid comprises terephthalic acid, and thereby, the properties of the polyester copolymer according to the present disclosure, such as heat resistance, chemical resistance, weather resistance, and the like, may be improved. And, the terephthalic acid residue may be also formed from terephthalic acid alkyl ester, preferably dimethylterephthalic acid.

The dicarboxylic acid component may further comprise an aromatic dicarboxylic acid component, an aliphatic dicarboxylic acid component, or a mixture thereof, besides terephthalic acid. In this case, it is preferable that dicarboxylic acid components other than terephthalic acid may be included in the content of 1 to 30 wt%, based on the total weight of the entire dicarboxylic acid components.

The aromatic dicarboxylic acid component may be C8 to 20, preferably C 8 to 14 aromatic dicarboxylic acid or a mixture thereof, and the like. As the examples of the aromatic dicarboxylic acid, isophthalic acid, naphthalenedicarboxylic acid such as 2,6-naphthalenedicarboxylic acid, and the like, diphenyl dicarboxylic acid, 4,4'-stilbenedicarboxylic acid, 2,5-furandicarboxylic acid, 2,5-thiophenedicarboxylic acid, and the like may be mentioned, but specific examples of the aromatic dicarboxylic acid are not limited thereto. The aliphatic dicarboxylic acid component may be C4 to 20, preferably C4 to 12 aliphatic dicarboxylic acid or a mixture thereof, and the like. As the examples of the aliphatic dicarboxylic acid, cyclohexanedicarboxylic acid such as 1,4-cyclohexanedicarboxylic acid, 1,3-cyclohexanedicarboxylic acid, and the like, linear, branched or cyclic aliphatic dicarboxylic acid such as phthalic acid, sebacic acid, succinic acid, isodecylsucinnic acid, maleic acid, fumaric acid, adipic acid, glutaric acid, azelaic acid, and the like, may be mentioned, but specific examples of the aliphatic dicarboxylic acid are not limited thereto.

**Diol**

The diol component used in the present disclosure is a main monomer constituting polyester copolymer together with the above explained dicarboxylic acid or derivative thereof. Particularly, the diol component comprises ethylene glycol and comonomers, and the comonomers comprises cyclohexanedimethanol or isosorbide.

The ethylene glycol is a component contributing to improvement in the transparency and impact strength of polyester copolymer. Preferably, the ethyleneglycol resides are included in the content of 5 to 100 moles, based on 100 moles of total diol component residues.

The cyclohexanedimethanol (for example, 1,2-cyclohexanedimethanol, 1,3-cyclohexanedimethanol or 1,4-cyclohexanedimethanol) is a component contributing to improvement in the transparency and impact strength of prepared polyester copolymer. Preferably, the cyclohexanedimethanol residues are included in the content of 5 to 90 moles, based on 100 moles of total diol components.

The isosorbide is used to improve processability of prepared polyester copolymer. Although the transparency and impact strength of polyester copolymer are improved by the above explained diol components of cyclohexanedimethanol and ethyleneglycol, shear thinning property should be improved and crystallization speed should be delayed for processability, but it is difficult to achieve such effects with cyclohexanedimethanol and ethyleneglycol. Thus, in case isosorbide is included as diol components, shear thinning property may be improved and a crystallization speed may be delayed while maintaining transparency and impact strength, thereby improving the processability of prepared polyester copolymer. Preferably, the isosorbide residues are included in the content of 0.1 to 50 moles, based on 100 moles of total diol component residues.

Meanwhile, among the diol components used for the copolymerization of polyester copolymer according to the present disclosure, the mole ratio of the comonomers and ethylene glycol (comonomers : ethylene glycol) is preferably 0.1:1 to 20:1. Wherein, the 'mole ratio' means a mole ratio of the components introduced during the copolymerization of the polyester copolymer. If the mole ratio is less than 0.1, the transparency and impact strength of polyester copolymer may be lowered, and if the mole ratio is greater than 20, by-product may increase, thus causing quality deterioration of polyester copolymer.

**Recycled bis-2-hydroxyethylterephthalate**

As used herein, the term 'recycled bis-2-hydroxyethylterephthalate' means material obtained from waste plastic collected after use. As waste plastic from which the bis-2-hydroxyethylterephthalate can be obtained, PET and PETG, and the like may be mentioned. For example, bis-2-hydroxyethylterephthalate can be obtained from PEG collected after use, by glycolysis, hydrolysis, methanolysis, and the like, and these methods are widely known in the art.

Since the recycled bis-2-hydroxyethylterephthalate are subjected to many chemical steps in the process of obtaining from waste plastic, in case it is used as monomer of copolymer, product quality deterioration may be inevitably generated. Particularly, in case it is used as monomer of polyester copolymer, color quality may be deteriorated, and by-products may be generated in large quantities as described below.

Thus, in the present disclosure, the recycled bis-2-hydroxyethylterephthalate is used as main monomer constituting polyester copolymer according to the present disclosure, while controlling the content such that the polyester copolymer comprises 10 to 80 wt% of the recycled bis-2-hydroxyethylterephthalate residues. If the content of the recycled bis-2-hydroxyethylterephthalate residues is less than 10 wt%, the content of the above explained diol relatively increases, and thereby, by-products derived from diol components, particularly by-products derived from ethylene glycol increase, thus causing quality deterioration of polyester copolymer. And, if the content of the recycled bis-2-hydroxyethylterephthalate residues is greater than 80 wt%, color quality and transparency of polyester copolymer may be deteriorated.

And, in order to inhibit quality deterioration of polyester copolymer according to the use of recycled bis-2-hydroxyethylterephthalate, in the copolymerization reaction of polyester copolymer according to the present disclosure, the mole ratio of diol and dicarboxylic acid or derivative thereof is controlled to 0.2:1 to 1.35:1. Wherein, the 'mole ratio' means a mole ratio of the components introduced during the copolymerization of the polyester copolymer. If the mole ratio is greater than 1.35, due to high mole ratio of diol, by-products derived from diol components, particularly by-products derived from ethylene glycol may exceed 2 wt%, and if the mole ratio is less than 0.2, the content of recycled bis-2- hydroxyethylterephthalate residues may relatively increase, thus deteriorating color quality and transparency of polyester copolymer.

## Polyester copolymer

The polyester copolymer according to the present disclosure may be prepared by copolymerizing the above explained recycled bis-2-hydroxyethylterephthalate, dicarboxylic acid or derivative thereof, and ethylene glycol and comonomers. Wherein, the copolymerization may be conducted by sequentially conducting an esterification reaction(step 1) and a polycondensation reaction(step 2).

The esterification reaction is conducted in the presence of an esterification catalyst, and an esterification catalyst comprising a zinc-based compound may be used. As specific examples of such zinc-based catalyst, zinc acetate, zinc acetate dihydrate, zinc chloride, zinc sulfate, zinc sulfide, zinc carbonate, zinc citrate, zinc gluconate, or a mixture thereof may be mentioned. And, the amount of each starting material used is as explained above.

The esterification reaction may be conducted at a pressure of 0 to 10.0 kg/cm$^2$ and a temperature of 150 to 300°C. The esterification reaction conditions may be appropriately controlled according to specific properties of prepared polyester, ratio of each component, or process conditions, and the like. Specifically, as preferable examples of the esterification reaction conditions, a pressure of 0 to 5.0 kg/ cm$^2$, more preferably 0.1 to 3.0 kg/ cm$^2$; a temperature of 200 to 270 °C, more preferably 240 to 260 °C may be mentioned.

And, the esterification reaction may be conducted batch-wise or continuously, and each raw material may be separately introduced, but it is preferable to introduce in the form of slurry in which dicarboxylic acid components and recycled bis-2-hydroxyethylterephthalate are mixed with diol components. And, a diol component such as isosorbide, which is solid at room temperature, can be made into slurry by dissolving in water or ethyleneglycol, and then, mixing with dicarboxylic acid such as terephthalic acid. Alternatively, slurry can be made by melting isosorbide at 60°C or more, and then, mixing with dicarboxylic acid such as terephthalic acid and other diol components. And, water may be additionally introduced in the slurry to assist in increasing the flowability of the slurry.

The polycondensation reaction may be conducted by reacting the esterification reaction product at a temperature of 150 to 300°C and a reduced pressure of 600 to 0.01 mmHg for 1 to 24 hours.

Such a polycondensation reaction may be conducted at a reaction temperature of 150 to 300°C, preferably 200 to 290°C, more preferably 260 to 280°C; and a pressure of 600 to 0.01 mmHg, preferably 200 to 0.05 mmHg, more preferably 100 to 0.1 mmHg. By applying the reduced pressure condition, glycol, the by-product of the polycondensation reaction, may be removed outside the system, and thus, if the polycondensation reaction does not meet the reduced pressure condition of 400 to 0.01 mmHg, removal of by-products may be insufficient. And, if the polycondensation reaction is conducted outside the temperature range of 150 to 300°C, in case the polycondensation reaction is progressed below 150°C, by-product glycol may not be effectively removed outside the system, and thus, the intrinsic viscosity of the final reaction product may be low, and the properties of prepared polyester resin may be deteriorated, and in case the reaction is progressed above 300°C, it may be more likely that the appearance of prepared polyester resin may be yellowed. And, the polycondensation reaction may be progressed for required time, for example, average residence time of 1 to 24 hours, until the intrinsic viscosity of the final reaction product reaches an appropriate level.

And, the polycondensation reaction may be conducted using a polycondensation catalyst comprising a titanium-based compound, a germanium-based compound, an antimony-based compound, an aluminum-based compound, a tin-based compounds, or a mixture thereof.

As the examples of the titanium-based compounds, tetraethyl titanate, acetyl tripropyl titanate, tetrapropyl titanate, tetrabutyl titanate, 2-ethylhexyl titanate, octyleneglycol titanate, titanium lactate, triethanolamine titanate, titanium acetylacetonate, titanium ethyl acetoacetate, isostearyl titanate, titanium dioxide, and the like may be mentioned.

As the examples of the germanium-based compounds, germanium dioxide, germanium tetrachloride, germanium ethylene glycoxide, germanium acetate, a copolymer using them, or a mixture thereof may be mentioned. Preferably, germanium dioxide may be used, and as such germanium dioxide, both crystalline or non-crystalline germanium dioxide may be used.

Meanwhile, the polyester copolymer according to the present disclosure has intrinsic viscosity of 0.50 to 1.0 dl/g, preferably 0.50 to 0.85 dl/g, more preferably 0.55 to 0.80 dl/g. The measurement method of intrinsic viscosity will be specified in the examples described below.

And, preferably, in the polyester copolymer according to the present disclosure, the content of by-products may be 2.0 wt% or less, more preferably 1.5 wt% or less, 1.0 wt% or less, based on the weight of the polyester copolymer. The by-products mean diol components other than EG(ethylene glycol) detected in polyester copolymer. The measurement method of by-products will be specified in the examples described below.

And, preferably, the Haze of the polyester copolymer according to the present disclosure may be 4 or less, more preferably 3.5 or less, 3.0 or less, 2.5 or less, 2.0 or less, 1.5 or less, or 1.0 or less. And, the theoretical lower limit of the Haze is 0, and in the present disclosure, it may be 0.1 or more, 0.2 or more, 0.3 or more, 0.4 or more, or 0.5 or more. The measurement method of Haze will be specified in the examples described below.

And, preferably, '(Hunter L color value) - (Huber b color value)' (hereinafter, referred to Plaque Color L-b) of the polyester copolymer according to the present disclosure to a specimen with a thickness of 6 mm may be 85 or more, more preferably 86 or more, 87 or more, 88 or more, 89 or more, or 90 or more. And, the upper limit of the Plaque Color L-b may be 100, and in the present disclosure, it may be 99 or less, 98 or less, 97 or less, 96 or less, or 95 or less. The measurement method of the Plaque Color L-b will be specified in the examples described below.

According to the present disclosure, there is also provided an article comprising the polyester copolymer.

[Advantageous Effects]

The above explained polyester copolymer according to the present disclosure can provide polyester copolymer having excellent properties while using recycled monomers.

[DETAILED DESCRIPTION OF THE EMBODIMENTS]

Hereinafter, preferable examples will be presented to assist in understanding of the invention. However, these examples are only presented for better understanding of the invention, and the scope of the invention is not limited thereby.

Example 1

Into a reactor with a capacity of 10 L to which a column, and a condenser that can be cooled by water are connected, recycled bis-2-hydroxyethylterephthalate(1269.7 g; hereinafter, referred to as 'r-BHET'), TPA(terephthalic acid; 2361.8 g), EG(ethylene glycol; 673.5 g), CHDM(1,4-cyclohexanedimethanol; 221.5 g), and ISB(isosorbide; 98.2 g) were introduced, and $GeO_2$(1.0 g) was introduced as a catalyst, phosphoric acid(1.46 g) as a stabilizer, and cobalt acetate(0.7 g) as a coloring agent.

Subsequently, nitrogen was introduced into the reactor to pressurize the reactor such that the pressure of the reactor is higher than atmospheric pressure by 1.0 kgf/cm$^2$ (absolute pressure: 1495.6 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.55 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 200°C at a speed of 40°C/hour, and maintained at 200°C. The solid phase polymerization reaction was progressed until the intrinsic viscosity of the particles in the reactor became 0.70 dl/g, thus preparing polyester copolymer.

**Example 2**

Into a reactor with a capacity of 10 L to which a column, and a condenser that can be cooled by water are connected, r-BHET(3461.1 g), TPA(969.4 g), EG(12.1 g), CHDM(140.2 g), ISB(113.7 g) were introduced, and $GeO_2$(1.0 g) was introduced as a catalyst, phosphoric acid(1.46 g) as a stabilizer, and cobalt acetate(0.7 g) as a coloring agent.

Subsequently, nitrogen was introduced into the reactor to pressurize the reactor such that the pressure of the reactor is higher than atmospheric pressure by 1.0 kgf/cm$^2$ (absolute pressure: 1495.6 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be conducted.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 200°C at a speed of 40°C/hour, and maintained at 200°C. The solid phase polymerization reaction was progressed until the intrinsic viscosity of the particles in the reactor became 0.95 dl/g, thus preparing polyester copolymer.

**Example 3**

Into a reactor with a capacity of 10 L to which a column, and a condenser that can be cooled by water are connected, r-BHET(4019.2 g), TPA(875.6 g), EG(39.2 g), CHDM(121.5 g) were introduced, and $TiO_2$(0.5 g) was introduced as a catalyst, phosphoric acid(1.46 g) as a stabilizer, Polysynthren Blue RLS(Clarient corporation, 0.016 g) as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 0.5 kgf/cm$^2$ (absolute pressure: 1127.8 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 275°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 210°C at a speed of 40°C/hour, and maintained at 210°C. The solid phase polymerization reaction was progressed until the intrinsic viscosity (IV) of the particles in the reactor became 0.80 dl/g, thus preparing polyester copolymer.

## Example 4

Into a reactor with a capacity of 10 L to which a column, and a condenser that can be cooled by water are connected, r-BHET(795.8 g), TPA(3814.0 g), EG(1554.0 g), CHDM(188.0 g) were introduced, and $TiO_2$(0.5 g) was introduced as a catalyst, phosphoric acid(1.46 g) as a stabilizer, and cobalt acetate(1.1 g) as a coloring agent.

Subsequently, nitrogen was introduced into the reactor to pressurize the reactor such that the pressure of the reactor is higher than atmospheric pressure by 1.0 kgf/cm$^2$ (absolute pressure: 1495.6 mmHg). And, the temperature of the reactor was raised to 220°C for 90 minutes, maintained at 220°C for 2 hours, and then, raised to 250°C for 2 hours. And then, the mixture in the reactor was observed with unaided eyes, and until the mixture became transparent, while maintaining the temperature of the reactor at 250°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 265°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.55 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 220°C at a speed of 40°C/hour, and maintained at 220°C. The solid phase polymerization reaction was progressed until the intrinsic viscosity (IV) of the particles in the reactor became 0.85 dl/g, thus preparing polyester copolymer.

## Example 5

Into a reactor with a capacity of 10 L to which a column, and a condenser that can be cooled by water are connected, r-BHET(2439.2 g), TPA(1471.5 g), EG(68.7 g), CHDM(797.8 g) were introduced, and $TiO_2$(1.0 g) was introduced as a catalyst, phosphoric acid(1.46 g) as a stabilizer, and cobalt acetate(0.8 g) as a coloring agent.

Subsequently, nitrogen was introduced into the reactor to pressurize the reactor such that the pressure of the reactor is higher than atmospheric pressure by 2.0 kgf/cm$^2$ (absolute pressure: 2231.1 mmHg). And, the temperature of the reactor was raised to 220°C for 90 minutes, maintained at 220°C for 2 hours, and then, raised to 255°C for 2 hours. And then, the mixture in the reactor was observed with unaided eyes, and until the mixture became transparent, while maintaining the temperature of the reactor at 255°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 285°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Example 6**

Into a reactor with a capacity of 10 L to which a column, and a condenser that can be cooled by water are connected, r-BHET(1320.0 g), TPA(2164.2 g), EG(599.2 g), CHDM(525.1 g) were introduced, and $TiO_2$(1.0 g) was introduced as a catalyst, phosphoric acid(1.46 g) as a stabilizer, and cobalt acetate(1.0 g) as a coloring agent.

Subsequently, nitrogen was introduced into the reactor to pressurize the reactor such that the pressure of the reactor is higher than atmospheric pressure by 1.5 kgf/cm$^2$ (absolute pressure: 1715.5 mmHg). And, the temperature of the reactor was raised to 220°C for 90 minutes, maintained at 220°C for 2 hours, and then, raised to 250°C for 2 hours. And then, the mixture in the reactor was observed with unaided eyes, and until the mixture became transparent, while maintaining the temperature of the reactor at 250°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 270°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Example 7**

Into a reactor with a capacity of 10 L to which a column, and a condenser that can be cooled by water are connected, r-BHET(1132.4 g), TPA(2220.2 g), EG(265.4 g), CHDM(1284.0 g), ISB(156.2 g) were introduced, and $GeO_2$(1.0 g) was introduced as a catalyst, phosphoric acid(1.46 g) as a stabilizer, Polysynthren Blue RLS(Clarient corporation, 0.013 g) as blue toner, and Solvaperm Red BB(Clarient corporation, 0.004 g) as red toner

Subsequently, nitrogen was introduced into the reactor to pressurize the reactor such that the pressure of the reactor is higher than atmospheric pressure by 1.0 kgf/cm$^2$ (absolute pressure: 1495.6 mmHg). And, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 275°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.65 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Example 8**

Into a reactor with a capacity of 10 L to which a column, and a condenser that can be cooled by water are connected, r-BHET(612.8 g), TPA(2269.3 g), EG(49.9 g), CHDM(1158.0 g), ISB(587.0 g) were introduced, and GeO$_2$(1.0 g) was introduced as a catalyst, phosphoric acid(1.46 g) as a stabilizer, Polysynthren Blue RLS(Clarient corporation, 0.020 g) as blue toner, and Solvaperm Red BB(Clarient corporation, 0.008 g) as red toner

Subsequently, nitrogen was introduced into the reactor to pressurize the reactor such that the pressure of the reactor is higher than atmospheric pressure by 0.5 kgf/cm$^2$ (absolute pressure: 1127.8 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 275°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.80 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Example 9**

Into a reactor with a capacity of 10 L to which a column, and a condenser that can be cooled by water are connected, r-BHET(3418.5 g), TPA(957.5 g), DMT(dimethyl terephthalate; 1119.0 g), EG(346 g), CHDM(221.5 g), ISB(84.2 g) were introduced, and acetate tetrahydrate(1.5 g) and Sb$_2$O$_3$(1.8 g) were introduced as catalysts, and cobalt acetate(0.7 g) as a coloring agent.

Subsequently, nitrogen was introduced into the reactor such that the pressure of the reactor became atmospheric pressure. And, the temperature of the reactor was raised to 220°C for 90 minutes, maintained at 220°C for 2 hours, and then, raised to 240°C for 2 hours. And then, the mixture in the reactor was observed with unaided eyes, and until the mixture became transparent, while maintaining the temperature of the reactor at 240°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 265°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 200°C at a speed of 40°C/hour, and maintained at 200°C. The solid phase polymerization reaction was progressed until the intrinsic viscosity (IV) of the particles in the reactor became 0.95 dl/g, thus preparing polyester copolymer.

**Example 10**

Into a reactor with a capacity of 10 L to which a column, and a condenser that can be cooled by water are connected, r-BHET(3461.1 g), TPA(969.4 g), IPA(isopropyl alcohol; 2262.0 g), EG(12.1 g), CHDM(140.2 g), ISB(113.7 g) were introduced, and $GeO_2$(1.0 g) was introduced as catalysts, and cobalt acetate(0.7 g) as a coloring agent.

Subsequently, nitrogen was introduced into the reactor to pressurize the reactor such that the pressure of the reactor is higher than atmospheric pressure by 1.0 kgf/cm$^2$(absolute pressure: 1495.6 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, into the reactor, nitrogen was flowed at a speed of 50 L/min. Wherein, the temperature of the reactor was raised from room temperature to 140°C at a speed of 40°C/hour, maintained at 140°C for 3 hours, and then, raised to 190°C at a speed of 40°C/hour, and maintained at 190°C. The solid phase polymerization reaction was progressed until the intrinsic viscosity (IV) of the particles in the reactor became 1.0 dl/g, thus preparing polyester copolymer.

**Comparative Example 1**

Into a reactor with a capacity of 10 L to which a column, and a condenser that can be cooled by water are connected, r-BHET(390.7 g), TPA(2936.3 g), EG(1400.7 g), CHDM(221.5 g), ISB(98.2 g) were introduced, and $GeO_2$(1.0 g) was introduced as catalysts, and phosphoric acid(1.46 g) as a stabilizer.

Subsequently, nitrogen was introduced into the reactor to pressurize the reactor such that the pressure of the reactor is higher than atmospheric pressure by 0.5 kgf/cm$^2$(absolute pressure: 1127.8 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. After maintaining at 100 mmHg for 1 hour, nitrogen was flowed into the reactor at a speed of 50 L/min. Wherein, the temperature of the reactor was raised from room temperature to 140°C at a speed of 40°C/hour, maintained at 140°C for 3 hours, and then, raised to 200°C at a speed of 40°C/hour, and maintained at 200°C. The solid phase polymerization reaction was progressed until the intrinsic viscosity (IV) of the particles in the reactor became 0.7 dl/g, thus preparing polyester copolymer.

**Comparative Example 2**

Into a reactor with a capacity of 10 L to which a column, and a condenser that can be cooled by water are connected, r-BHET(2645.6 g), TPA(1729.0 g), EG(6.5 g), CHDM(150.0 g), ISB(106.4 g) were introduced, and $GeO_2$(1.0 g) was introduced as catalysts, phosphoric acid(1.46 g) as a stabilizer, and cobalt acetate(0.7 g) as a coloring agent.

Subsequently, nitrogen was introduced into the reactor to pressurize the reactor such that the pressure of the reactor is higher than atmospheric pressure by 1.0 kgf/cm² (absolute pressure: 1495.6 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, nitrogen was flowed into the reactor at a speed of 50 L/min. Wherein, the temperature of the reactor was raised from room temperature to 140°C at a speed of 40°C/hour, maintained at 140°C for 3 hours, and then, raised to 200°C at a speed of 40°C/hour, and maintained at 200°C. The solid phase polymerization reaction was progressed until the intrinsic viscosity (IV) of the particles in the reactor became 0.95 dl/g, thus preparing polyester copolymer.

**Comparative Example 3**

Into a reactor with a capacity of 10 L to which a column, and a condenser that can be cooled by water are connected, r-BHET(364.2 g), TPA(3162.2 g), EG(1295.4 g), CHDM(118.0 g) were introduced, and $GeO_2$ (1.0 g) was introduced as catalysts, phosphoric acid(1.46 g) as a stabilizer, Polysynthren Blue RLS(Clarient corporation, 0.012 g)as blue toner, and Solvaperm Red BB(Clarient corporation, 0.004 g) as red toner.

Subsequently, nitrogen was introduced into the reactor to pressurize the reactor such that the pressure of the reactor is higher than atmospheric pressure by 0.5 kgf/cm² (absolute pressure: 1127.8 mmHg). And, the temperature of the reactor was raised to 220°C for 90 minutes, maintained at 220°C for 2 hours, and then, raised to 255°C for 2 hours. And then, the mixture in the reactor was observed with unaided eyes, and until the mixture became transparent, while maintaining the temperature of the reactor at 255°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 280°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.75 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, nitrogen was flowed into the reactor at a speed of 50 L/min. Wherein, the temperature of the reactor was raised from room temperature to 140°C at a speed of 40°C/hour, maintained at 140°C for 3 hours, and then, raised to 210°C at a speed of 40°C/hour, and maintained at 210°C. The solid phase polymerization reaction was progressed until the intrinsic viscosity (IV) of the particles in the reactor became 0.80 dl/g, thus preparing polyester copolymer.

**Comparative Example 4**

Into a reactor with a capacity of 10 L to which a column, and a condenser that can be cooled by water are connected, r-BHET(3194.9 g), TPA(623.7 g), CHDM(94.1 g) were introduced, and $GeO_2$(1.0 g) was introduced as catalysts, phosphoric acid(1.46 g) as a stabilizer, Polysynthren Blue RLS(Clarient corporation, 0.010 g)as blue toner, and Solvaperm Red BB(Clarient corporation, 0.003 g) as red toner.

Subsequently, nitrogen was introduced into the reactor to pressurize the reactor such that the pressure of the reactor is higher than atmospheric pressure by 1.5 kgf/cm$^2$(absolute pressure: 1715.5 mmHg). And, the temperature of the reactor was raised to 220°C for 90 minutes, maintained at 220°C for 2 hours, and then, raised to 260°C for 2 hours. And then, the mixture in the reactor was observed with unaided eyes, and until the mixture became transparent, while maintaining the temperature of the reactor at 260°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 270°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.65 dl/g. If the intrinsic viscosity of the mixture in the reactor reached a desired level, the mixture was discharged outside the reactor to make strand, which was solidified with a coolant, and then, granulated such that the average weight became 12 to 14 mg.

The particles were left at 150°C for 1 hour to crystallize, and then, introduced into a solid phase polymerization reactor with a capacity of 20 L. And then, nitrogen was flowed into the reactor at a speed of 50 L/min. Wherein, the temperature of the reactor was raised from room temperature to 140°C at a speed of 40°C/hour, maintained at 140°C for 3 hours, and then, raised to 220°C at a speed of 40°C/hour, and maintained at 220°C. The solid phase polymerization reaction was progressed until the intrinsic viscosity (IV) of the particles in the reactor became 0.85 dl/g, thus preparing polyester copolymer.

**Comparative Example 5**

Into a reactor with a capacity of 10 L to which a column, and a condenser that can be cooled by water are connected, r-BHET(320.1 g), TPA(3009.6 g), EG(1166.1 g), CHDM(837.7 g) were introduced, and $GeO_2$(1.0 g) was introduced as catalysts, phosphoric acid(1.5 g) as a stabilizer, and cobalt acetate(0.7 g) as a coloring agent.

Subsequently, nitrogen was introduced into the reactor to pressurize the reactor such that the pressure of the reactor is higher than atmospheric pressure by 2.0 kgf/cm$^2$(absolute pressure: 2231.1 mmHg). And, the temperature of the reactor was raised to 220°C for 90 minutes, maintained at 220°C for 2 hours, and then, raised to 265°C for 2 hours. And then, the mixture in the reactor was observed with unaided eyes, and until the mixture became transparent, while maintaining the temperature of the reactor at 265°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 270°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Comparative Example 6**

Into a reactor with a capacity of 10 L to which a column, and a condenser that can be cooled by water are connected, r-BHET(4278.0 g), TPA(310.7 g), CHDM(539.0 g) were introduced, and $GeO_2$(1.0 g) was introduced as catalysts, phosphoric acid(1.46 g) as a stabilizer, and cobalt acetate(0.8 g) as a coloring agent.

Subsequently, nitrogen was introduced into the reactor to pressurize the reactor such that the pressure of the reactor is higher than atmospheric pressure by 1.5 $kgf/cm^2$(absolute pressure: 1715.5 mmHg). And, the temperature of the reactor was raised to 220°C for 90 minutes, maintained at 220°C for 2 hours, and then, raised to 270°C for 2 hours. And then, the mixture in the reactor was observed with unaided eyes, and until the mixture became transparent, while maintaining the temperature of the reactor at 270°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 275°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.65 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

**Comparative Example 7**

Into a reactor with a capacity of 10 L to which a column, and a condenser that can be cooled by water are connected, r-BHET(420.6 g), TPA(2473.9 g), EG(657.1 g), CHDM(1192.3 g), ISB(145.1 g) were introduced, and $GeO_2$(1.0 g) was introduced as catalysts, phosphoric acid(1.46 g) as a stabilizer, and cobalt acetate(0.8 g) as a coloring agent.

Subsequently, nitrogen was introduced into the reactor to pressurize the reactor such that the pressure of the reactor is higher than atmospheric pressure by 1.5 $kgf/cm^2$(absolute pressure: 1715.5 mmHg). And, the temperature of the reactor was raised to 220°C for 90 minutes, maintained at 220°C for 2 hours, and then, raised to 270°C for 2 hours. And then, the mixture in the reactor was observed with unaided eyes, and until the mixture became transparent, while maintaining the temperature of the reactor at 270°C, an esterification reaction was progressed. During this process, by-products were discharged through the column and condenser. After the esterification reaction was completed, nitrogen in the pressurized reactor was discharged outside to lower the pressure of the reactor to atmospheric pressure, and then, the mixture in the reactor was transferred to a reactor with a capacity of 7 L in which a vacuum reaction can be progressed.

And, the pressure of the reactor was lowered from atmospheric pressure to 5 Torr (absolute pressure: 5 mmHg) for 30 minutes, and simultaneously, the temperature of the reactor was raised to 275°C for 1 hour, and while maintaining the pressure of the reactor at 1 Torr (absolute pressure: 1 mmHg) or less, a polycondensation reaction was conducted. At the beginning of the polycondensation reaction, a stirring speed is set rapid, but as the polycondensation reaction progressed, in case stirring force decreases due to increase in the viscosity of the reactant or the temperature of the reactant increases beyond the established temperature, the stirring speed can be appropriately controlled. The polycondensation reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor to make strand, which was solidified with a coolant, and then, granulated such that the average weight became 12 to 14 mg, thus preparing polyester copolymer.

The contents of ingredients introduced for preparation of polyester copolymers in the Examples and Comparative Examples were shown in the following Table 1.

[Table 1]

|  | r-BHET | TPA | EG | CHDM | ISB | (EG+CHDM +ISB)/TPA | EG/(CHDM +ISB) |
|---|---|---|---|---|---|---|---|
| unit | mol | mol | mol | mol | mol | - | - |
| Example 1 | 5.0 | 14.2 | 10.9 | 1.5 | 0.7 | 0.92 | 4.91 |
| Example 2 | 13.6 | 5.38 | 0.2 | 1.0 | 0.8 | 0.33 | 0.11 |
| Example 3 | 15.8 | 5.3 | 0.6 | 0.8 | - | 0.28 | 0.75 |
| Example 4 | 3.1 | 23.0 | 25.1 | 1.3 | - | 1.15 | 19.20 |
| Example 5 | 9.6 | 8.9 | 1.1 | 5.5 | - | 0.75 | 0.20 |
| Example 6 | 5.2 | 13.0 | 9.7 | 3.6 | - | 1.02 | 2.65 |
| Example 7 | 4.5 | 13.4 | 4.3 | 8.9 | 1.1 | 1.07 | 0.43 |
| Example 8 | 2.4 | 13.7 | 0.8 | 8.0 | 4.0 | 0.94 | 0.07 |
| Example 9 | 13.5 | 5.8 | 5.6 | 1.5 | 0.6 | 1.33 | 2.64 |
| Example 10 | 13.6 | 5.8 | 0.2 | 1.0 | 0.8 | 0.33 | 0.11 |
| Comparativ e Example 1 | 1.5 | 17.7 | 22.6 | 1.5 | 0.7 | 1.40 | 10.22 |
| Comparativ e Example 2 | 10.4 | 10.4 | 0.1 | 1.0 | 0.7 | 0.18 | 0.06 |
| Comparativ e Example 3 | 1.4 | 19.0 | 20.9 | 0.8 | - | 1.14 | 25.50 |
| Comparativ e Example 4 | 12.6 | 3.8 | - | 0.7 | - | 0.17 | - |
| Comparativ e Example 5 | 1.3 | 18.1 | 18.8 | 5.8 | - | 1.36 | 3.23 |
| Comparativ e Example 6 | 16.8 | 1.9 | - | 3.7 | - | 2.00 | - |
| Comparativ e Example 7 | 1.7 | 14.9 | 10.6 | 8.3 | 1.0 | 1.33 | 1.14 |

## Experimental Example

For the copolymers prepared in the Examples and Comparative Examples, properties were evaluated as follows.

(1) Composition of residues

The compositions(mol%) of residues derived from acid and diol in polyester resin were confirmed through 1H-NMR obtained using nuclear magnetic resonance device (JEOL, 600MHz FT-NMR) at 25°C, after dissolving a sample in a $CDCl_3$ solvent at the concentration of 3 mg/mL. And, TMA residues were confirmed by quantitatively analyzing the content of benzene-1,2,4-triethylcarboxylate produced by the reaction of ethanol with TMA through ethanolysis, through the spectrum measured using gas chromatography(Agilent Technologies, 7890B) at 250°C, and contents(wt%) based on the total weight of polyester resin were confirmed.

(2) Intrinsic viscosity

The polyester copolymer was dissolved in 150°C orthochlorophenol(OCP) at the concentration of 0.12%, and then, the intrinsic viscosity was measured using Ubbelohde viscometer in a constant-temperature bath of 35°C. Specifically, the temperature of the viscometer was maintained at 35°C, and an efflux time (t0) required for the solvent to pass between specific internal sections of the viscometer, and a time (t) required for the solution to pass through were calculated. And then, the t0 value and the t value were substituted in the following Formula 1 to calculate specific viscosity, and the calculated specific viscosity value was substituted in the following Formula 2 to calculate intrinsic viscosity.

## [Formula 1]

$$\eta_{sp} = \frac{t - t_0}{t_0}$$

## [Formula 2]

$$[\eta] = \frac{\sqrt{1 + 4A\eta_{sp}} - 1}{2Ac}$$

(3) Haze

A polyester resin specimen with a thickness of 6 mm was prepared, and the Haze of the specimen was measured using CM-3600A measuring device of Minolta Inc. by ASTM D1003-97 measurement method.

(4) Plaque color L-b

The chromaticity and brightness of the sample were measured using Varian Cary 5 UV/Vis/NIR spectrophotometer equipped with a diffused reflection component. A polyester resin specimen with a thickness of 6 mm was prepared, and transmission date was obtained at the observer angle of 2° with Illuminant D65, it was processed using color analysis device in Grams/32 software to calculate Hunter L*a*b*, and in the following Table, L-b was described.

(5) By-products

By-products were measured by GC quantitative analysis of polyester resin, and specifically, measured under the following conditions.

   a. pretreatment of sample: 0.1 g of a sample was dissolved in 5 mL of MeOH.

   b. GC conditions

      i. Model : Agilent 7890

      ii. Column : DB-WAX (30m * 0.25mm * 0.25$\mu$m)

      iii. Oven Temperature : 50 °C (2min) - 10 °C/min - 250 °C (5min)

      iv. Injector Temp. : 250 °C

      v. Detector Temp. : 250 °C

      vi. Flow : 1.5 mL/min ($N_2$), Split ratio : 1/30

Quantitative analysis of diol other than EG(ethylene glycol) was progressed to measure the sum of by-products.
The results were shown in the following Table 2.

[Table 2]

|  | r-BHET | CHDM | ISB | Intrinsic viscosity | Haze | Plaque Color L-b | By-products |
|---|---|---|---|---|---|---|---|
| Unit | wt% | mol% | mol% | dg/l | - | - | wt% |
| Example 1 | 30 | 8 | 2 | 0.70 | 0.8 | 93 | 0.5 |
| Example 2 | 75 | 5 | 2 | 0.95 | 2.0 | 90 | 2.0 |
| Example 3 | 80 | 4 | - | 0.80 | 4.0 | 85 | 1.5 |

(continued)

|  | r-BHET | CHDM | ISB | Intrinsic viscosity | Haze | Plaque Color L-b | By-products |
|---|---|---|---|---|---|---|---|
| Unit | wt% | mol% | mol% | dg/l | - | - | wt% |
| Example 4 | 14 | 5 | - | 0.85 | 2.0 | 91 | 1.5 |
| Example 5 | 50 | 30 | - | 0.70 | 1.0 | 90 | 1.2 |
| Example 6 | 30 | 20 | - | 0.80 | 1.0 | 92 | 1.0 |
| Example 7 | 22 | 50 | 3 | 0.65 | 1.5 | 90 | 1.0 |
| Example 8 | 15 | 50 | 15 | 0.80 | 0.8 | 88 | 0.7 |
| Example 9 | 69 | 8 | 2 | 0.95 | 4.0 | 85 | 2.0 |
| Example 10 | 75 | 5 | 2 | 1.00 | 4.0 | 85 | 1.0 |
| Comparative Example 1 | 9 | 8 | 2 | 0.70 | 3.0 | 83 | 2.5 |
| Comparative Example 2 | 61 | 5 | 2 | 0.95 | 30.0 | 85 | 0.5 |
| Comparative Example 3 | 8 | 4 | - | 0.80 | 2.0 | 80 | 2.5 |
| Comparative Example 4 | 82 | 4 | - | 0.85 | 15.0 | 85 | 0.5 |
| Comparative Example 5 | 6 | 30 | - | 0.60 | 10.0 | 75 | 2.1 |
| Comparative Example 6 | 80 | 20 | - | 0.65 | 8.0 | 65 | 4.0 |
| Comparative Example 7 | 8 | 50 | 3 | 0.70 | 5.0 | 70 | 2.3 |

**Claims**

1. Polyester copolymer copolymerized from recycled bis-2-hydroxyethylterephthalate, dicarboxylic acid or a derivative thereof, and diol comprising ethylene glycol and comonomers, having a structure in which a part derived from the bis-2-hydroxyethylterephthalate, an acid part derived from the dicarboxylic acid or derivative thereof, and a diol part derived from the diol are repeated,

   wherein the polyester copolymer comprises 10 to 80 wt% of the part derived from recycled bis-2-hydroxyethylterephthalate, and
   the mole ratio of the diol and the dicarboxylic acid or derivative thereof is 0.2:1 to 1.35:1.

2. The polyester copolymer according to claim 1,
   wherein the comonomer is cyclohexanedimethanol or isosorbide.

3. The polyester copolymer according to claim 1,
   wherein the mole ratio of the comonomers and ethyleneglycol is 0.1:1 to 20:1.

4. The polyester copolymer according to claim 1,
   wherein the mole ratio of the diol and the dicarboxylic acid or derivative thereof is 0.2:1 to 1.35:1.

5. The polyester copolymer according to claim 1,
   wherein the intrinsic viscosity of the polyester copolymer is 0.50 to 1.0 dl/g.

6. The polyester copolymer according to claim 1,
   wherein by-products of the polyester copolymer is 2.0 wt% or less.

7. The polyester copolymer according to claim 1,
   wherein the Haze of the polyester copolymer is 4 or less.

8. The polyester copolymer according to claim 1,
   wherein (Hunter L color value) - (Hunter b color value) of the polyester copolymer to a specimen with a thickness of 6 mm is 85 or more.

9. A method for preparing the polyester copolymer according to any one of claims 1 to 8, comprising steps of:

subjecting recycled bis-2-hydroxyethylterephthalate, dicarboxylic acid or a derivative thereof, and diol comprising ethylene glycol and comonomers to an esterification reaction (step 1); and
subjecting the product of step 1 to a polycondensation reaction (step 2).

10. The method according to claim 9,
wherein the esterification reaction is conducted in the presence of an esterification catalyst comprising zinc acetate, zinc acetate dihydrate, zinc chloride, zinc sulfate, zinc sulfide, zinc carbonate, zinc citrate, zinc gluconate, or a mixture thereof.

11. The method according to claim 9,
wherein the polycondensation reaction is conducted in the presence of a polycondensation catalyst comprising a titanium-based compound, a germanium-based compound, an antimony-based compound, an aluminum-based compound, a tin-based compound, or a mixture thereof.

12. An article comprising the polyester copolymer according to any one of claims 1 to 8.

## INTERNATIONAL SEARCH REPORT

| International application No. |
| --- |
| **PCT/KR2021/004845** |

| A. | CLASSIFICATION OF SUBJECT MATTER |
| --- | --- |

**C08G 63/12**(2006.01)i; **C08G 63/83**(2006.01)i; **C08G 63/85**(2006.01)i; **C08L 67/02**(2006.01)i

According to International Patent Classification (IPC) or to both national classification and IPC

| B. | FIELDS SEARCHED |
| --- | --- |

Minimum documentation searched (classification system followed by classification symbols)

C08G 63/12(2006.01); B32B 27/36(2006.01); C07C 67/48(2006.01); C07C 69/82(2006.01); C08G 63/16(2006.01); C08G 63/78(2006.01); C08L 67/00(2006.01); D01D 5/34(2006.01); D01F 8/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 재사용(recyle), 몰 비(mole ratio), 디올(diol), 디카르복실산(dicarboxylic acid)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-0490000 B1 (AIES CO., LTD.) 17 May 2005 (2005-05-17) See paragraphs [0018] and [0028]; claims 1-4; and tables 2-3. | 1-12 |
| Y | KR 10-2012-0133548 A (WOONGJIN CHEMICAL CO., LTD.) 11 December 2012 (2012-12-11) See claim 1. | 1-12 |
| Y | KR 10-2014-0009117 A (TORAY INDUSTRIES, INC.) 22 January 2014 (2014-01-22) See paragraphs [0022]-[0062]; example 1; and claim 1. | 1-12 |
| A | KR 10-2017-0138990 A (TORAY INDUSTRIES, INC.) 18 December 2017 (2017-12-18) See entire document. | 1-12 |
| A | CN 105367425 A (AEROSPACE RESOURCE RECYCLING TECHNOLOGY CO., LTD.) 02 March 2016 (2016-03-02) See entire document. | 1-12 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 August 2021** | **09 August 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/004845**

| Patent document cited in search report | | | Publication date (day/month/year) | Patent family member(s) | | | Publication date (day/month/year) |
|---|---|---|---|---|---|---|---|
| KR | 10-0490000 | B1 | 17 May 2005 | AT | 328023 | T | 15 June 2006 |
| | | | | AU | 764147 | B2 | 14 August 2003 |
| | | | | AU | 7947800 | A | 30 April 2001 |
| | | | | CA | 2355309 | A1 | 26 April 2001 |
| | | | | CA | 2355309 | C | 11 September 2007 |
| | | | | CN | 1133681 | C | 07 January 2004 |
| | | | | CN | 1327459 | A | 19 December 2001 |
| | | | | DE | 60028342 | T2 | 24 May 2007 |
| | | | | EP | 1156069 | A1 | 21 November 2001 |
| | | | | EP | 1156069 | A4 | 18 June 2003 |
| | | | | EP | 1156069 | B1 | 31 May 2006 |
| | | | | HK | 1040727 | A1 | 21 June 2002 |
| | | | | ID | 29037 | A | 26 July 2001 |
| | | | | JP | 3595304 | B2 | 02 December 2004 |
| | | | | KR | 10-2001-0101251 | A | 14 November 2001 |
| | | | | MY | 120859 | A | 30 November 2005 |
| | | | | TW | I239971 | B | 21 September 2005 |
| | | | | US | 6350851 | B1 | 26 February 2002 |
| | | | | WO | 01-29110 | A1 | 26 April 2001 |
| KR | 10-2012-0133548 | A | 11 December 2012 | KR | 10-1303819 | B1 | 04 September 2013 |
| KR | 10-2014-0009117 | A | 22 January 2014 | CN | 103189415 | A | 03 July 2013 |
| | | | | CN | 103189415 | B | 15 April 2015 |
| | | | | EP | 2615123 | A1 | 17 July 2013 |
| | | | | EP | 2615123 | A4 | 07 December 2016 |
| | | | | EP | 2615123 | B1 | 17 July 2019 |
| | | | | EP | 2615123 | B9 | 13 November 2019 |
| | | | | JP | 5790506 | B2 | 07 October 2015 |
| | | | | KR | 10-1783293 | B1 | 29 September 2017 |
| | | | | MY | 165613 | A | 18 April 2018 |
| | | | | TW | 201217428 | A | 01 May 2012 |
| | | | | TW | I523886 | B | 01 March 2016 |
| | | | | US | 2013-0253165 | A1 | 26 September 2013 |
| | | | | US | 9273182 | B2 | 01 March 2016 |
| | | | | WO | 2012-032876 | A1 | 15 March 2012 |
| KR | 10-2017-0138990 | A | 18 December 2017 | CN | 107429047 | A | 01 December 2017 |
| | | | | CN | 107429047 | B | 21 January 2020 |
| | | | | EP | 3284786 | A1 | 21 February 2018 |
| | | | | EP | 3284786 | A4 | 14 November 2018 |
| | | | | EP | 3284786 | B1 | 23 September 2020 |
| | | | | JP | 2017-165988 | A | 21 September 2017 |
| | | | | JP | 2017-193718 | A | 26 October 2017 |
| | | | | JP | 2018-111822 | A | 19 July 2018 |
| | | | | JP | 6341278 | B2 | 13 June 2018 |
| | | | | JP | 6812914 | B2 | 13 January 2021 |
| | | | | PH | 12017501874 | A1 | 26 February 2018 |
| | | | | TW | 201700529 | A | 01 January 2017 |
| | | | | US | 10850485 | B2 | 01 December 2020 |
| | | | | US | 2018-0126714 | A1 | 10 May 2018 |
| | | | | WO | 2016-167084 | A1 | 20 October 2016 |
| CN | 105367425 | A | 02 March 2016 | None | | | |

Form PCT/ISA/210 (patent family annex) (July 2019)

**INTERNATIONAL SEARCH REPORT**
Information on patent family members

International application No.

**PCT/KR2021/004845**

| Patent document cited in search report | Publication date (day/month/year) | Patent family member(s) | Publication date (day/month/year) |
|---|---|---|---|
| | | | |

Form PCT/ISA/210 (patent family annex) (July 2019)